# FASCICULE DE BREVET EUROPEEN

(11) **EP 1 700 770 B1**
(45) Date de publication et mention de la délivrance du brevet: **23.07.2008**
(21) Numéro de dépôt: 06110446.9
(22) Date de dépôt: 27.02.2006
(51) Int. Cl.: B62B 9/18, B60B 33/02

(54) **Poussette pour enfant, à roues équipées de suspensions**
Child's push chair having wheels equiped with suspensions
Kinderwagen mit aufgehängten Rädern

(30) Priorité: 08.03.2005 FR 0502326; 24.06.2005 FR 0506477
(43) Date de publication de la demande: 13.09.2006
(73) Titulaire: DOREL FRANCE SA, 49309 Cholet Cedex (FR)
(72) Inventeur: Ageneau, Laurent, 44210, Pornic (FR)
(74) Mandataire: Bioret, Ludovic

(56) Documents cités:
- WO-A-94/16599
- US-A- 4 649 596

## Description

### 1. Domaine de l'invention

Le domaine de l'invention est celui la puériculture, et plus précisément des voitures d'enfant ou poussettes. Plus précisément encore, l'invention concerne les suspensions de telles poussettes.

### 2. Solutions de l'art antérieur

### 2.1 Art antérieur

On connaît de nombreux types de poussette, pliables ou non. Les poussettes sont équipées de blocs de roues, au nombre de quatre le plus souvent, mais aussi parfois de trois ou de deux.

Les blocs de roues comportent le plus souvent une ou deux roues chacun. Généralement, ces blocs de roues comprennent des suspensions. Quand un bloc comprend une seule roue, ces suspensions sont le plus souvent situées dans la partie supérieure du bloc de roues, au-dessus de la roue, au niveau de la liaison avec le châssis.

On connait du document WO 94/16599 une poussette comportant des blocs de deux roues, les roues étant montées aux extrémités d'un axe commun. Cet axe est lié au châssis de la poussette par une pièce de liaison comportant une suspension.

### 2.2 Inconvénients de l'art antérieur

Un inconvénient de cette technique de l'art antérieur est que le système de suspension occupe une place importante dans le bloc de roues, et qu'elle est mal adaptée au cas des blocs comportant une seule roue.

### 3. Objectifs de l'invention

L'invention a notamment pour objectif de pallier ces inconvénients de l'art antérieur.

Plus précisément, un objectif de l'invention est de fournir une suspension efficace applicable notamment pour des blocs de roues comportant une seule roue, offrant une bonne compacité, et notamment permettant de réduire les distances entre les roues quand la poussette est en position pliée, et la hauteur de la poussette en position dépliée.

En d'autres termes, un objectif de l'invention est de fournir une technique permettant de réduire l'encombrement global de la poussette, en position pliée.

Un autre objectif de l'invention est de fournir une suspension présentant un aspect nouveau et esthétique.

### 4. Résumé de l'invention

Ces objectifs, ainsi que d'autres qui apparaîtront par la suite, sont atteints à l'aide d'une poussette pour enfant, comprenant un châssis équipé d'au moins deux roues, dont, selon l'invention au moins une des roues est reliée au châssis par une fourche présentant une partie supérieure de liaison avec le châssis et deux flancs sensiblement parallèles entre eux et perpendiculaires à l'arbre de rotation de la roue, chacun des flancs présentant une lumière oblongue destinée à recevoir l'arbre de rotation de façon que ce dernier puisse se déplacer parallèlement au flanc, et portant des moyens de rappel, dont une première extrémité est solidaire du flanc et une seconde extrémité est solidaire de l'arbre.

Ces moyens de rappel assurent donc la suspension de la roue, dont l'arbre de rotation peut se déplacer dans les lumières oblongues. La suspension de la roue est alors directement liée à l'arbre de rotation, ce qui permet de réduire l'encombrement.

Selon un mode de réalisation avantageux de l'invention, les moyens de rappel sont montés dans la lumière oblongue.

Préférentiellement, chacun des flancs porte des moyens de guidage des moyens de rappel.

Avantageusement, les moyens de guidage s'étendent à l'intérieur de la lumière oblongue, sur au moins une portion de celle-ci.

Selon un mode de réalisation préférentiel, la lumière oblongue s'étend sensiblement parallèlement à un axe défini par l'arbre de rotation et le point de liaison de la fourche avec le châssis.

Selon un autre mode de réalisation de l'invention, la lumière oblongue s'étend sensiblement verticalement. Cette disposition de la lumière permet une bonne efficacité de la suspension.

Selon un aspect particulier, l'arbre de rotation porte un élément de liaison avec les moyens de rappel.

Avantageusement, la fourche porte au moins un enjoliveur, dissimulant au moins en partie au moins une des lumières oblongues et/ou l'arbre de rotation.

Selon un mode de réalisation particulier de l'invention, au moins une des fourches est mobile en rotation par rapport au châssis.

Ce mode de réalisation permet de mettre en oeuvre des roues pivotantes sur la poussette.

Préférentiellement, un dispositif de verrouillage permet de bloquer la rotation de la ou des fourche(s) par rapport au châssis.

Ce verrouillage peut notamment être utile lors du rangement de la poussette, en position pliée.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un châssis de poussette dont les roues sont équipées de suspensions selon un premier mode de réalisation de l'invention ;
- la figure 2 illustre le bloc de roues de la poussette de la figure 1 ;
- la figure 3 illustre un bloc de roues de poussette selon un deuxième mode de réalisation de l'invention ;
- la figure 4 présente les éléments constituant la suspension du bloc de roues de la figure 1
- la figure 5 présente un schéma cinématique simplifié du système de suspension de la figure 1.

### 6. Description détaillée de l'invention

### 6.1 Rappel du principe de l'invention

L'invention propose donc un système de suspension dans lequel l'arbre de rotation de la roue peut coulisser dans des lumières oblongues percées dans les flancs d'une fourche.

### 6.2 Description d'un mode de réalisation

### Premier mode de réalisation

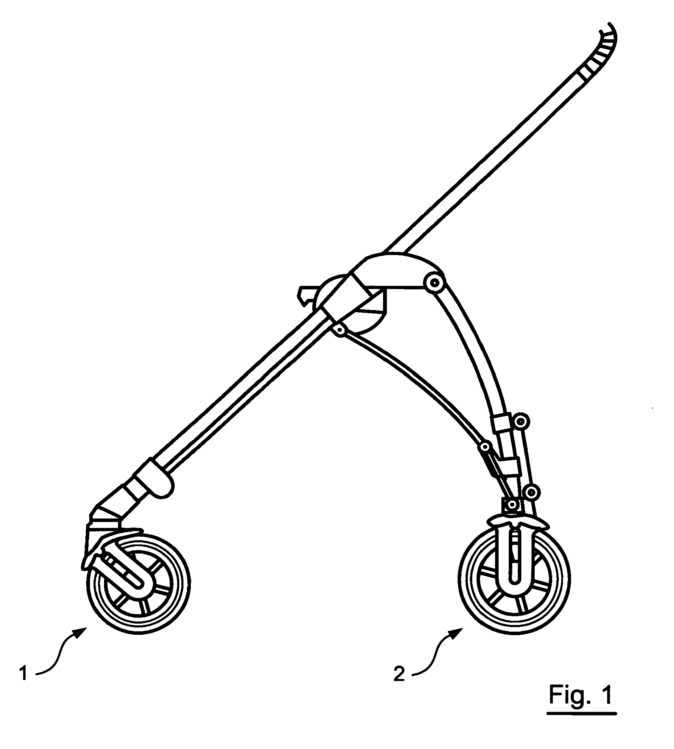

La figure 1 présente un châssis de poussette selon un mode de réalisation de l'invention. Cette poussette comporte quatre blocs de roue, ou fourches. On peut voir sur cette figure deux de ces blocs de roue : le bloc de roue avant gauche 1 et le bloc de roue arrière gauche 2.

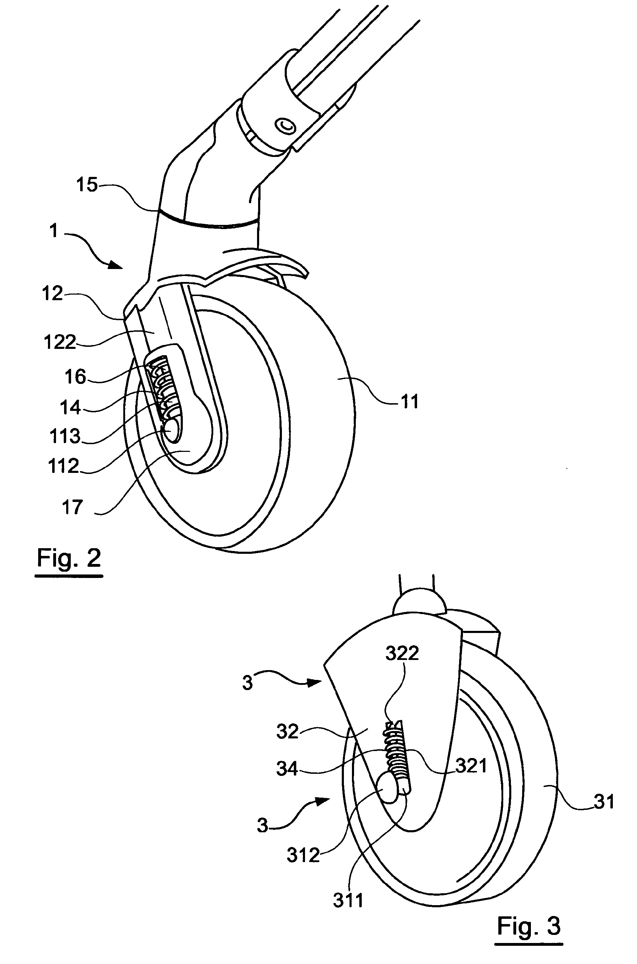

La figure 2 présente en détail le bloc de roue avant gauche 1 de la poussette de la figure 1. Ce bloc de roue comporte une unique roue 11. Dans d'autres modes de réalisation, il est possible que le bloc de roues comprennent plusieurs roues.

Le haut du bloc de roue est solidarisé avec le châssis de la poussette. Une liaison pivot 15, située dans la partie haute de ce bloc de roue 1, permet la rotation de l'axe de la roue 11 par rapport au châssis de la poussette. Cette rotation peut également être bloquée par un dispositif de verrouillage (non représenté). Un exemple de dispositif de verrouillage adapté est décrit dans le document de brevet FR 2 839 935. Il met en oeuvre un pion mobile, actionné par un câble. Dans ce cas, des moyens de rappel peuvent être prévus pour ramener la roue dans une position parallèle à l'axe principal de la poussette, de façon automatique.

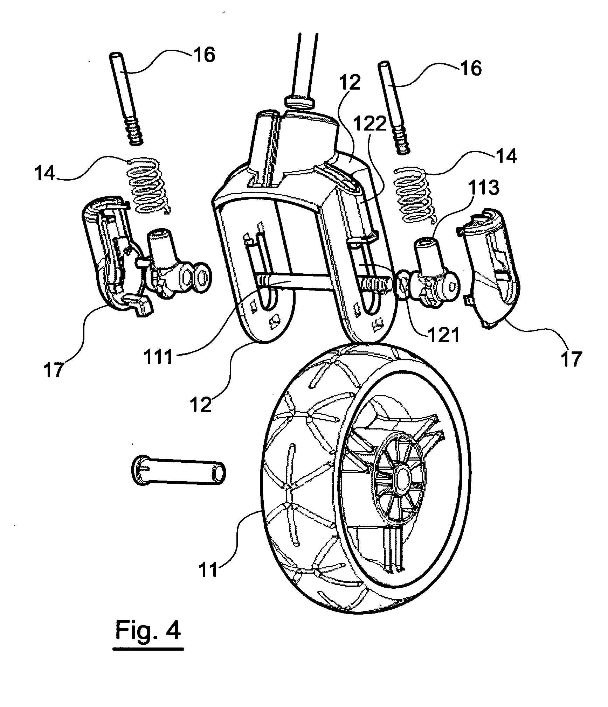

On peut voir sur la figure 4, qui représente les différents éléments constituant le bloc de roue de la figure 2, que la roue 11 comporte un arbre de rotation, ou axe 111, qui dépasse de part et d'autre de la roue.

La partie inférieure du bloc de roue, ou fourche, est constituée par deux flancs 12 s'étendant de part et d'autre de la roue 11. Une lumière oblongue 121 est percée dans chacun de ces flancs.

Pour des raisons esthétiques, l'orientation de la lumière oblongue 121 est ici sensiblement parallèle à un axe défini par l'arbre de rotation 111 et le point de liaison de la fourche avec le châssis. On pourrait également prévoir que, pour des raisons d'efficacité de la suspension, cette lumière soit orientée parallèlement aux sollicitations les plus importantes que peut subir la roue 11.

L'arbre de rotation 111 de la roue 11 est monté dans les lumières oblongues 121. Cet arbre de rotation 111 n'a donc pas une position fixe par rapport à la fourche 1. Au contraire, il peut se déplacer en coulissant dans les lumières oblongues 121.

Un ressort hélicoïdal 14 est conçu pour venir dans chaque lumière oblongue 121, en appui contre la fourche 1 à l'extrémité supérieure de la lumière oblongue 121, et en appui contre l'arbre de rotation 111 ou une pièce liée à cet axe. Ce ressort 14 tend donc à maintenir l'arbre de rotation 111 contre l'extrémité inférieure de la lumière oblongue 121. Par contre, ce ressort 14 permet à la roue de remonter légèrement le long des lumières oblongues 121 en réaction à une contrainte, tel qu'un choc ou un appui. Les ressorts 14 et les lumières 121 assurent donc la suspension des roues de la poussette.

Pour guider le ressort 14 dans son emplacement, dans la lumière oblongue 121, une tige 16 est placée à l'intérieur de ce ressort 14. L'extrémité supérieure de cette tige 16 est logée dans un premier manchon 122 qui fait partie du flanc 12. L'extrémité inférieure de cette tige 16 est logée dans un deuxième manchon 113, qui est lié à l'arbre de rotation 111 de la roue.

La longueur de la tige 16 et la profondeur des manchons 113 et 122 sont calculés de manière à ce que la tige 16 coulisse librement sans gêner le coulissement de l'arbre de rotation 111 dans la lumière 121, et sans sortir des manchons 113 et 122.

Un enjoliveur 17 vient recouvrir partiellement le ressort 14. Cet enjoliveur peut se fixer par clipsage. Selon un autre mode de réalisation, un tel enjoliveur peut assurer, avec les bords de la lumière oblongue 121, les fonctions de maintien ou de guidage du ressort 14, et la présence de la tige 16 n'est plus nécessaire.

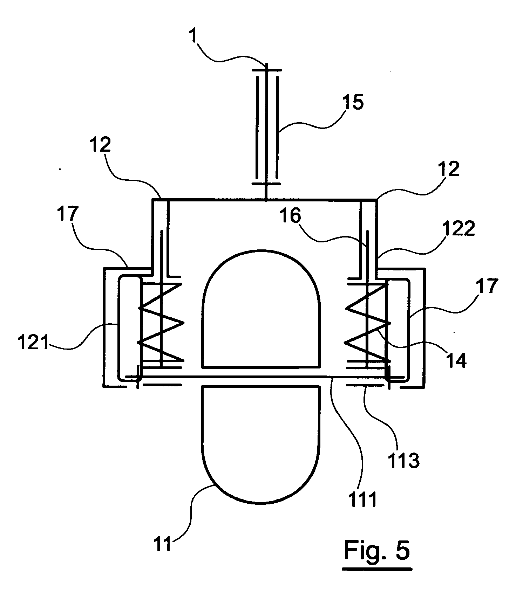

La figure 5 présente un schéma cinématique simplifié du système de suspension des figures 1, 2 et 4.

### Un autre bloc de roue

La figure 3 présente un bloc de roue, ou fourche 3, selon un autre mode de réalisation de l'invention.

Là encore, le bloc de roue 3 comporte une unique roue 31. Cette roue comporte un arbre de rotation 311 au bout duquel se trouve un bouton de blocage de l'arbre de rotation 312.

Le bloc de roue comporte deux flancs 32, chacun de ces flancs étant percé d'une lumière oblongue 321. L'orientation de cette lumière est, ici, sensiblement verticale. L'arbre de rotation 311 est monté dans les lumières oblongues 321.

Un ressort 34 est conçu pour venir dans la lumière oblongue 321, en appui contre la fourche 3 à l'extrémité supérieure de la lumière oblongue, et en appui contre l'arbre de rotation 311.

Dans ce mode de réalisation, le ressort n'est guidé que partiellement par une tige 322, qui est solidaire du flanc 32. Avantageusement, quand le flanc 32 est constitué de tôle métallique, la tige 322 peut faire partie de la même pièce que ce flanc 32. Ce mode de réalisation permet donc une mise en oeuvre très facile de l'invention.

## Revendications

1. Poussette pour enfant, comprenant un châssis équipé d'au moins deux roues,
**caractérisée en ce qu'**au moins une desdites roues (11, 31) est reliée audit châssis par une fourche présentant une partie supérieure de liaison avec ledit châssis et deux flancs (12, 32) sensiblement parallèles entre eux et perpendiculaires à l'arbre de rotation (111, 311) de ladite roue (11, 31),
chacun desdits flancs (12, 32) présentant une lumière oblongue (121,321) destinée à recevoir ledit arbre de rotation (111, 311) de façon que ce dernier puisse se déplacer parallèlement audit flanc,
et portant des moyens de rappel (14, 34), dont une première extrémité est solidaire dudit flanc et une seconde extrémité est solidaire dudit arbre.

2. Poussette selon la revendication 1, **caractérisée en ce que** lesdits moyens de rappel (14, 34) sont montés dans ladite lumière oblongue (121,321).

3. Poussette selon l'une quelconque des revendications 1 et 2, **caractérisée en ce que** chacun desdits flancs porte des moyens de guidage desdits moyens de rappel (14, 34).

4. Poussette selon les revendications 2 et 3, **caractérisée en ce que** lesdits moyens de guidage s'étendent à l'intérieur de ladite lumière oblongue (121,321), sur au moins une portion de celle-ci.

5. Poussette selon l'une quelconque des revendications 1 à 4, **caractérisée en ce que** ladite lumière oblongue (121,321) s'étend sensiblement parallèlement à un axe défini par ledit arbre de rotation (111, 311) et le point de liaison de ladite fourche avec ledit châssis.

6. Poussette selon l'une quelconque des revendications 1 à 5, **caractérisée en ce que** ladite lumière oblongue (121,321) s'étend sensiblement verticalement.

7. Poussette selon l'une quelconque des revendications 1 à 6, **caractérisée en ce que** ledit arbre de rotation (111) porte un élément de liaison (113) avec lesdits moyens de rappel (14).

8. Poussette selon l'une quelconque des revendications 1 à 7, **caractérisée en ce que** ladite fourche porte au moins un enjoliveur (17), dissimulant au moins en partie au moins une desdites lumières oblongues (121) et/ou ledit arbre de rotation (111).

9. Poussette selon l'une quelconque des revendications 1 à 8, **caractérisée en ce qu'**au moins une desdites fourches est mobile en rotation par rapport audit châssis.

10. Poussette selon la revendication 9, **caractérisée en ce qu'**un dispositif de verrouillage permet de bloquer la rotation de la ou lesdites fourche(s) par rapport audit châssis.

## Claims

1. Pushchair for a child, comprising a frame equipped with at least two wheels,
**characterized in that** at least one of the said wheels (11, 31) is coupled to the said frame by a fork having an upper part connecting it to the said frame and two sides (12, 32) substantially parallel with each other and perpendicular to the axle (111, 311) of the said wheel (11, 31),
each of the said sides (12, 32) having an oblong slot (121, 321) intended for receiving the said axle (111, 311) so that the latter can move parallel with the said side
and carrying return travel means (14, 34), a first end of which is secured to the said side and a second end of which is secured to the said axle.

2. Pushchair according to Claim 1, **characterized in that** the said return travel means (14, 34) are fitted in the said oblong slot (121, 321).

3. Pushchair according to either of Claims 1 and 2, **characterized in that** each of the said sides carries means of guiding the said return travel means (14, 34).

4. Pushchair according to Claims 2 and 3, **characterized in that** the said guiding means run inside the said oblong slot (121, 321), in at least a portion of the latter.

5. Pushchair according to any one of Claims 1 to 4, **characterized in that** the said oblong slot (121, 321) runs substantially parallel with an axis defined by the said axle (111,311) and the point of the said fork's connection to the said frame.

6. Pushchair according to any one of Claims 1 to 5, **characterized in that** the said oblong slot (121, 321) runs substantially vertically.

7. Pushchair according to any one of Claims 1 to 6, **characterized in that** the said axle (111) carries an element of connection (113) to the said return travel means (14).

8. Pushchair according to any one of Claims 1 to 7, **characterized in that** the said fork carries at least one decorative cap (17), at least partly concealing at least one of the said oblong slots (121) and/or the said axle (111).

9. Pushchair according to any one of Claims 1 to 8, **characterized in that** at least one of the said forks is rotationally moveable with respect to the said frame.

10. Pushchair according to Claim 9, **characterized in that**, with a bolting device, the rotation of the said fork(s) with respect to the said frame can be locked.

## Patentansprüche

1. Kinderwagen, der einen mit mindestens zwei Rädern ausgerüsteten Rahmen aufweist,
**dadurch gekennzeichnet, dass** mindestens eines der besagten Räder (11, 31) mit dem besagten Rahmen über eine Gabel verbunden ist, die ein oberes Verbindungsteil zum Anschluss an den Rahmen und zwei in etwa parallel zueinander und senkrecht zur Drehachse (111, 311) des besagten Rades (11, 31) liegende Seitenteile (12, 32) aufweist,
wobei jedes der besagten Seitenteile (12, 32) eine Langöffnung (121, 321) aufweist, welche die besagte Drehachse (111, 311) so aufnehmen soll, dass sich diese parallel zum besagten Seitenteil bewegen kann,
und wobei die Seitenteile über Rückholmittel (14, 34) verfügen, deren erstes Ende mit dem besagten Seitenteil verbunden ist, während das zweite Ende mit der besagten Achse verbunden ist.

2. Kinderwagen nach Anspruch 1, **dadurch gekennzeichnet, dass** die besagten Rückholmittel (14, 34) in der besagten Langöffnung (121, 321) angebracht sind.

3. Kinderwagen nach einem der Ansprüche 1 oder 2, **dadurch gekennzeichnet, dass** jedes der besagten Seitenteile Führungsmittel für die besagten Rückholmittel (14, 34) trägt.

4. Kinderwagen nach den Ansprüchen 2 und 3, **dadurch gekennzeichnet, dass** die besagten Führungsmittel sich innerhalb der besagten Langöffnung (121, 321) über mindestens einem Teil dieser Öffnung erstrecken.

5. Kinderwagen nach einem der Ansprüche 1 bis 4, **dadurch gekennzeichnet, dass** die besagte Langöffnung (121, 321) sich in etwa parallel zu einer Achse erstreckt, die von der besagten Drehachse (111, 311) und dem Verbindungspunkt zwischen der besagten Gabel und dem besagten Rahmen gebildet wird.

6. Kinderwagen nach einem der Ansprüche 1 bis 5, **dadurch gekennzeichnet, dass** die besagte Langöffnung (121, 321) sich in etwa in vertikaler Richtung erstreckt.

7. Kinderwagen nach einem der Ansprüche 1 bis 6, **dadurch gekennzeichnet, dass** die besagte Drehachse (111) ein Verbindungsteil (113) zu den besagten Rückholmitteln (14) trägt.

8. Kinderwagen nach einem der Ansprüche 1 bis 7, **dadurch gekennzeichnet, dass** die besagte Gabel mindestens eine Blende (17) trägt, welche zumindest teilweise mindestens eine der besagten Langöffnungen (121) und/oder die Drehachse (111) verdeckt.

9. Kinderwagen nach einem der Ansprüche 1 bis 8, **dadurch gekennzeichnet, dass** mindestens eine der besagten Gabeln sich gegenüber dem besagten Rahmen drehen lässt.

10. Kinderwagen nach Anspruch 9, **dadurch gekennzeichnet, dass** eine Verriegelungsvorrichtung das Blockieren der besagten Gabel(n) gegenüber dem besagten Rahmen ermöglicht.
